# EUROPEAN PATENT SPECIFICATION

(11) **EP 4 318 051 B1**
(45) Date of publication and mention of the grant of the patent: **02.09.2026**
(21) Application number: 22780147.9
(22) Date of filing: 16.03.2022
(51) Int. Cl.: G02B 3/00, G02B 3/08, F21S 41/143, F21S 41/16, F21S 41/265, F21S 41/275, F21S 41/43, F21V 5/00, F21V 5/04, F21V 5/08, F21W 102/155, F21Y 115/10, F21Y 115/30, B29D 11/00, B29C 33/38, B29C 33/42, B29C 45/16, B29C 45/00, F21S 41/27, F21S 41/20, F21S 41/32

(54) **MICROLENS ARRAY, VEHICLE LAMP USING MICROLENS ARRAY, AND METHOD FOR MANUFACTURING MICROLENS ARRAY**
MIKROLINSENANORDNUNG, FAHRZEUGLAMPE MIT MIKROLINSENANORDNUNG UND VERFAHREN ZUR HERSTELLUNG EINER MIKROLINSENANORDNUNG
RÉSEAU DE MICROLENTILLES, LAMPE DE VÉHICULE UTILISANT UN RÉSEAU DE MICROLENTILLES, ET PROCÉDÉ DE FABRICATION D'UN RÉSEAU DE MICROLENTILLES

(30) Priority: 31.03.2021 JP 2021061229; 30.08.2021 JP 2021139972
(43) Date of publication of application: 07.02.2024
(73) Proprietor: KOITO MANUFACTURING CO., LTD., Minato-ku, Tokyo, 108-8711 (JP)
(72) Inventor: MOTOTSUJI, Ayaka, Shizuoka-shi, Shizuoka 424-8764 (JP); ISHIDA, Hiroyuki, Shizuoka-shi, Shizuoka 424-8764 (JP)
(74) Representative: Cabinet Beau de Loménie
(86) International application number: PCT/JP2022/012101
(87) International publication number: WO 2022/209927

(56) References cited:
- JP-A- 2008 100 481
- JP-A- 2015 210 441
- JP-A- 2018 134 780
- JP-A- 2020 144 180
- JP-A- 2020 199 636
- JP-A- H0 427 976
- JP-A- S5 590 924
- JP-B2- 6 372 739

## Description

### TECHNICAL FIELD

The present disclosure relates to a microlens array, a vehicle lamp using the microlens array, and a method for manufacturing the microlens array.

### BACKGROUND ART

Patent Literature 1 or the like discloses a vehicle lamp configured to radiate light emitted from a light source unit toward the front of the lamp through a microlens array (hereinafter, also referred to as "MLA") to form a desired distribution pattern.

JP 6372739B2 discloses a panel member.

### CITATION LIST

### PATENT LITERATURE

Patent Literature 1: JP2016-534503A

### SUMMARY OF INVENTION

### TECHNICAL PROBLEM

The vehicle lamp described in Patent Literature 1 includes, between a rear lens array and a front lens array, a light shielding plate to define the shape of each of a plurality of light source images formed by a plurality of condenser lens portions. The light shielding plate is configured to shield a part of the light emitted from the light source unit to form a low-beam distribution pattern having a cutoff line. In such a vehicle lamp, a part of the light emitted from the light source is shielded by the light shielding plate and is not emitted to the front of the lamp, and there is room for improvement in light use efficiency.

An object of the present invention is to provide a microlens array having high light use efficiency, a vehicle lamp using the microlens array.

### SOLUTION TO PROBLEM

A microlens array according to an aspect of the present invention is a microlens array as defined in claim 1; including:
a plurality of optical systems,
in which each of the optical systems includes a pair of an incidence-side lens portion and an emission-side lens portion,
a hollow portion is provided between an incidence surface of the incidence-side lens portion and an emission surface of the emission-side lens portion,
the hollow portion includes:
   a first surface extending to a focus position of the emission-side lens portion; and
   a second surface extending from the first surface toward the incidence surface, and
a cut line forming portion is formed by a boundary portion between the first surface and the second surface.

A microlens array according to an aspect of the present invention is a resin-molded microlens array as defined in claim 2; including:
a plurality of optical systems,
in which each of the optical systems includes a pair of an incidence-side lens portion and an emission-side lens portion,
a low refractive index portion is provided between an incidence surface of the incidence-side lens portion and an emission surface of the emission-side lens portion,
a refractive index of the low refractive index portion is lower than a refractive index of another portion,
the low refractive index portion includes:
   a first surface extending through a focus of the emission surface; and
   a second surface extending from the first surface to the incidence surface, and
a cut line forming portion is formed by a boundary portion between the first surface and the second surface.

A vehicle lamp according to an aspect of the present invention is defined in claim 12 and includes:
a light source; and
the above microlens array.

A method for manufacturing a microlens array according to an unclaimed aspect of the present disclosure is a method for manufacturing a microlens array including an incidence-side lens portion, an emission-side lens portion, and a low refractive index portion, the method including:
a step of bringing a first mold and a second mold into contact with each other to form a first cavity;
a step of injecting a molten first resin into the first cavity and of curing the first resin in the first cavity to form one of the incidence-side lens portion and one of the emission-side lens portion;
a step of separating the second mold from the first mold while holding the one of the incidence-side lens portion and the one of the emission-side lens portion, and of bringing the first mold and a third mold into contact with each other, to form a second cavity;
a step of injecting a molten second resin into the second cavity and of curing the second resin in the second cavity to form a low refractive index portion;
a step of separating the third mold from the first mold while holding the low refractive index portion and the one of the incidence-side lens portion and the one of the emission-side lens portion, and of bringing the first mold and a fourth mold into contact with each other, to form a third cavity; and
a step of injecting a molten third resin into the third cavity and of curing the third resin in the third cavity to form an other of the incidence-side lens portion and an other of the emission-side lens portion,
in which the cured second resin has a refractive index lower than a refractive index of the cured first resin and a refractive index of the cured third resin.

### ADVANTAGEOUS EFFECTS OF INVENTION

According to the present invention, it is possible to provide the microlens array having high light use efficiency, and the vehicle lamp using a microlens array.

### BRIEF DESCRIPTION OF DRAWINGS

FIG. 1 is a schematic cross-sectional view of a vehicle lamp according to a first embodiment of the present disclosure.
FIG. 2 is a perspective view of a microlens array shown in FIG. 1.
FIG. 3 is a side view of the microlens array shown in FIG. 1.
FIG. 4 is a schematic view showing a first surface of a hollow portion of the microlens array.
FIG. 5 shows diagrams of an example of a method for manufacturing the microlens array according to the first embodiment of the present disclosure.
FIG. 6 shows diagrams of a modification of the method for manufacturing the microlens array shown in FIG. 5.
FIG. 7 is a schematic cross-sectional view of a vehicle lamp according to a second embodiment of the present disclosure.
FIG. 8 is a side view of the microlens array shown in FIG. 7.
FIG. 9 is a flowchart showing an example of a method for manufacturing the microlens array according to the second embodiment of the present disclosure.
FIG. 10 is a diagram illustrating a step of the method for manufacturing the microlens array of FIG. 9.
FIG. 11 is a diagram illustrating a step of the method for manufacturing the microlens array of FIG. 9.
FIG. 12 is a diagram illustrating a step of the method for manufacturing the microlens array of FIG. 9.
FIG. 13 is a diagram illustrating a step of the method for manufacturing the microlens array of FIG. 9.
FIG. 14 is a diagram illustrating a step of the method for manufacturing the microlens array of FIG. 9.
FIG. 15 is a diagram illustrating a step of the method for manufacturing the microlens array of FIG. 9.
FIG. 16 is a diagram illustrating a step of the method for manufacturing the microlens array of FIG. 9.
FIG. 17 is a diagram illustrating a step of the method for manufacturing the microlens array of FIG. 9.

### DESCRIPTION OF EMBODIMENTS

Hereinafter, embodiments of the present disclosure will be described with reference to the drawings. The same components and members shown in the drawings are denoted by the same reference numerals, and a repeated description thereof will be appropriately omitted. Further, the embodiments are exemplary only without limiting the invention, and all or combinations of the features described in the embodiments are not necessarily essential to the invention.

The drawings used in the following description are appropriately changed in scale in order to make each member recognizable. Further, directions of "left", "right", "front", "rear", "upper", and "lower" shown in the drawings are relative directions set for convenience of description. In this specification, a "front-rear direction" is a direction including a "front direction" and a "rear direction". A "left-right direction" is a direction including a "left direction" and a "right direction". An "upper-lower direction" is a direction including an "upper direction" and a "lower direction".

### (First Embodiment)

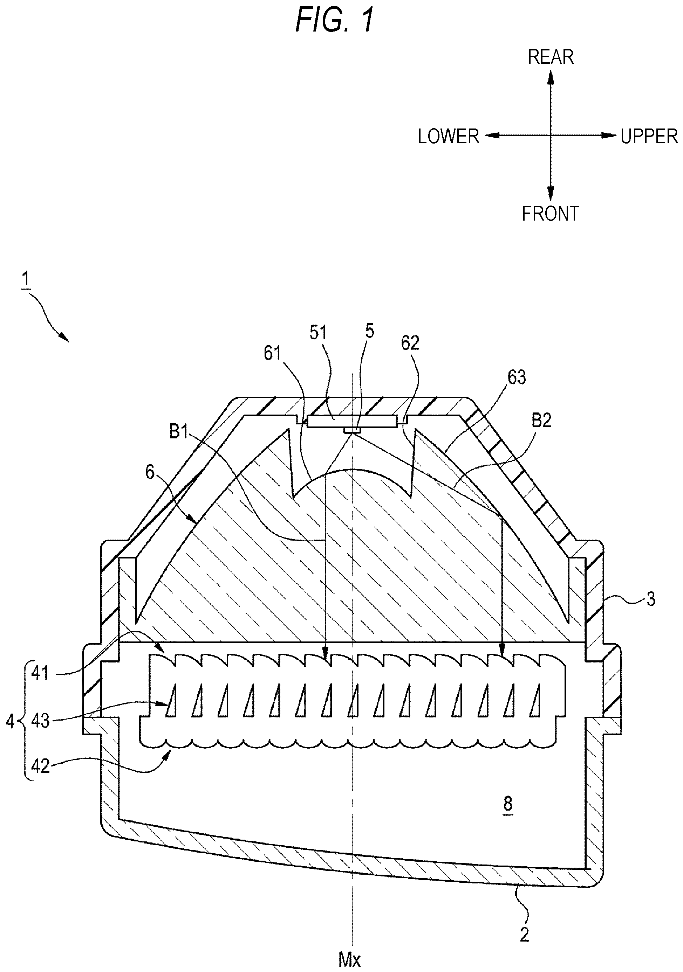

FIG. 1 is a schematic cross-sectional view of a vehicle lamp 1 according to a first embodiment of the present disclosure. As shown in FIG. 1, the vehicle lamp 1 includes an outer cover 2 and a housing 3. A lamp chamber 8 is formed by the outer cover 2 and the housing 3.

The lamp chamber 8 includes a light source 5, a primary lens 6, and a microlens array 4. The light source 5 is disposed to face forward in a state of being mounted on a substrate 51 supported by the housing 3. As the light source 5, for example, a light emitting diode (LED) or a laser diode (LD) can be used. Light emitted from the light source 5 passes through the primary lens 6 and the microlens array 4 and is emitted forward of the vehicle lamp 1. In the following description, a virtual straight line extending, in the front-rear direction of the vehicle lamp 1, from a center point of a light emitting surface of the light source 5 is referred to as a main optical axis Mx of the vehicle lamp 1.

The primary lens 6 is configured to convert light emitted from the light source 5 into parallel light to be incident on the microlens array 4. As the primary lens 6, a collimating lens, an aplanatic lens, a Fresnel lens, or the like may be used. The primary lens 6 shown in FIG. 1 has a first incident portion 61 provided at a position facing the light source 5, and a second incident portion 62 provided as a vertical wall surrounding the periphery of the first incident portion 61. Light B1 incident on the first incident portion 61 from the light source 5 is refracted at the first incident portion 61 to be parallel light of the main optical axis Mx, for example. Light B2 incident on the second incident portion 62 from the light source 5 is reflected by a reflective surface 63 to be parallel light of the main optical axis Mx.

In the vehicle lamp 1 shown in FIG. 1, the light source 5, the primary lens 6, and the microlens array 4 configure one light source unit. The vehicle lamp 1 may include a plurality of light source units in the same lamp chamber 8.

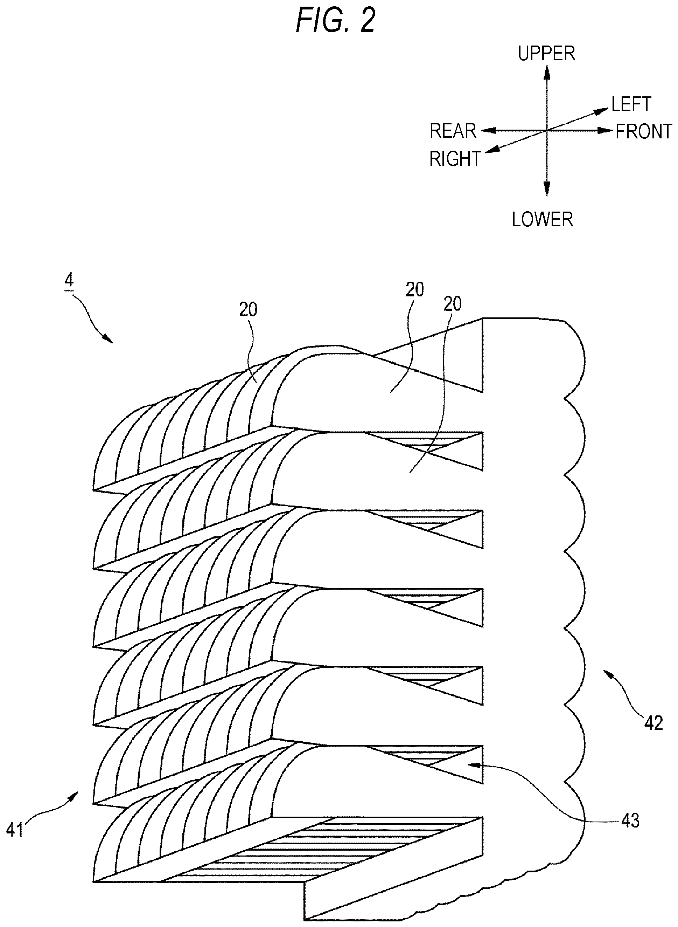

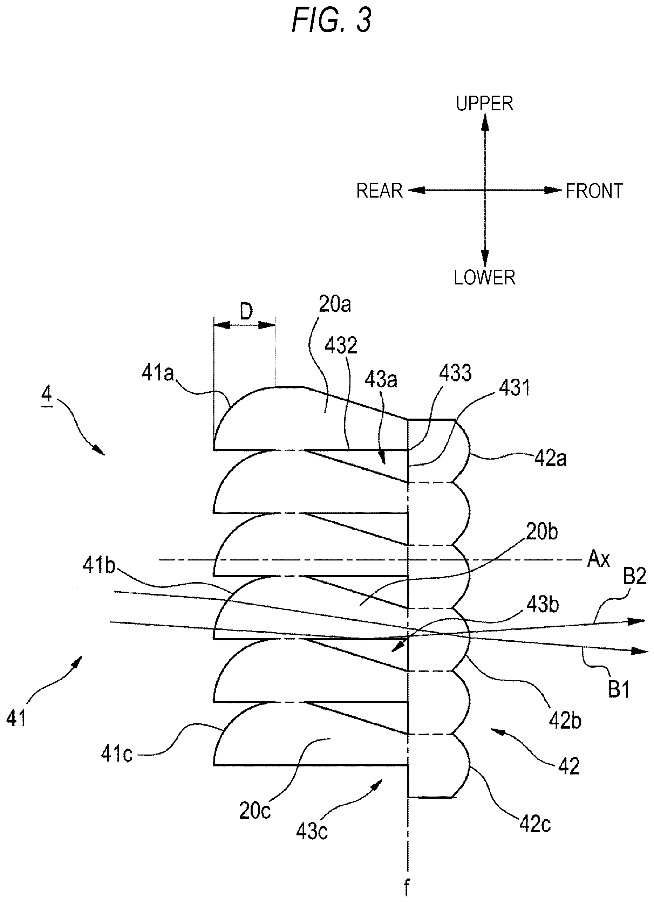

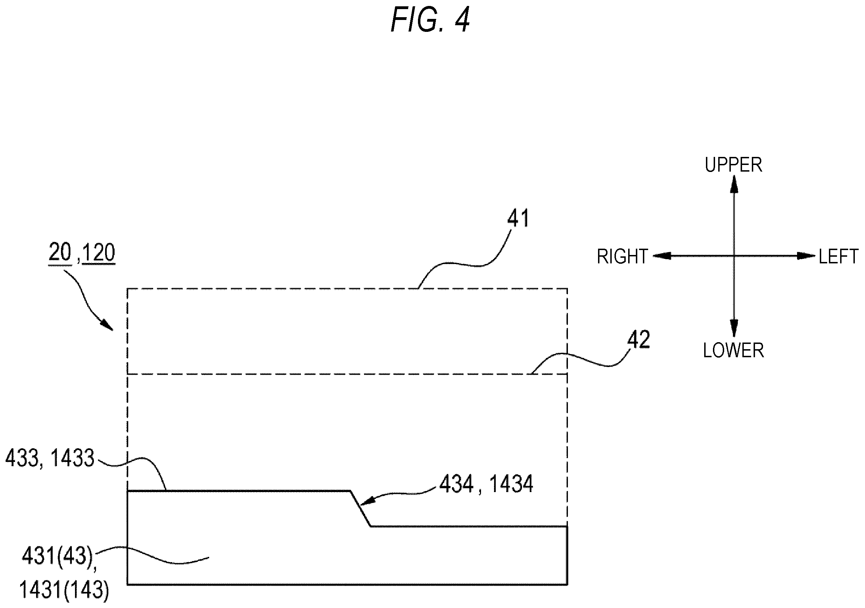

The microlens array 4 includes a plurality of optical systems 20. The microlens array 4 is, for example, an optical component formed of a transparent resin material or a glass material. Hereinafter, the microlens array 4 will be described in detail with reference to FIGs. 2 to 4. FIG. 2 is a perspective view of the microlens array 4 shown in FIG. 1. FIG. 3 is a side view of the microlens array 4 shown in FIG. 1. FIG. 4 is a schematic view showing a first surface 431 of a hollow portion 43 of the microlens array 4.

As shown in FIG. 2, the optical systems 20 are adjacent to each other in a direction orthogonal to a light emission direction (the main optical axis Mx: an optical axis Ax of an incidence-side lens portion 41), and the optical systems 20 are integrated. Since a plurality of lens components are integrated as a single microlens array 4, positioning accuracy of each optical system 20 is high. Further, handling such as carrying is facilitated. The size of the optical system 20 (each microlens) is freely set, but is preferably about 0.5 to 6.0 mm square in an emission-direction front view.

As shown in FIG. 3, each optical system 20 includes a pair of the incidence-side lens portion 41 and an emission-side lens portion 42, and the hollow portion 43. For example, an optical system 20a includes a portion including an incidence surface 41a of the incidence-side lens portion 41, a portion including an emission surface 42a of the emission-side lens portion 42, and a hollow portion 43a. The same applies to optical systems 20b and 20c.

The incidence-side lens portion 41 is provided closer to a primary lens 6 side than is the hollow portion 43. The emission-side lens portion 42 is provided closer to an outer cover 2 side than is the hollow portion 43. The incidence-side lens portion 41 and the emission-side lens portion 42 are provided on a common optical axis Ax and face each other. The optical axis Ax of each optical system 20 is parallel to the main optical axis Mx of the vehicle lamp 1. Each of the incidence-side lens portion 41 and the emission-side lens portion 42 has a convex lens shape. Light incident on the incidence-side lens portion 41 of a certain optical system 20 is basically configured to be incident on the emission-side lens portion 42 belonging to the same optical system 20. In the illustrated microlens array 4, the optical systems 20 have the same shape and dimension. A focal length of the emission-side lens portion 42 is equal to or smaller than a lens thickness D of the incidence-side lens portion 41.

The hollow portion 43 is provided between a pair of the incidence-side lens portion 41 and the emission-side lens portion 42 that forms one optical system 20. The hollow portion 43 is a cavity penetrating the microlens array 4 in a first direction (the left-right direction in the example of FIG. 2). According to this configuration, the hollow portion 43 can be collectively formed for the optical systems 20 arranged along the first direction, which contributes to reduction in manufacturing cost and reduction in time required for manufacturing.

Any medium such as air is present inside the hollow portion 43. The hollow portion 43 may be a sealed closed region or an unsealed open region. In the example of FIG. 3, hollow portions 43a and 43b are open regions in which the left-right direction is open, and a hollow portion 43c is an open region in which the left-right direction and the lower direction are open.

In the present embodiment, the hollow portion 43 includes the first surface 431 extending to a focus position f of the emission-side lens portion, and a second surface 432 extending in a direction from the first surface 431 to an incidence surface of the incidence-side lens portion 41. A cut line forming portion is formed by a boundary portion 433 between the first surface 431 and the second surface 432. In the present embodiment, the first surface 431 is on a plane including the upper-lower direction and the left-right direction. The second surface 432 is on a plane including the front-rear direction and the left-right direction.

Light emitted from the light source varies depending on the type of the light source, but tends to spread in a radiation shape. Therefore, in a microlens array of the related art, even in a case where the shape or the like of an incidence-side lens portion is adjusted, light emitted from a light source and incident on an incidence-side lens portion may not reach an emission-side lens portion. However, since the configuration according to the present embodiment includes the hollow portion 43 having the second surface 432, among the light incident on the incidence-side lens portion 41, at least a part of light that does not incident on the emission-side lens portion 42 can be reflected by the second surface 432 of the hollow portion 43 and incident on the emission-side lens portion 42. Therefore, light use efficiency can be increased. Further, since a path of the light from the light source 5 to the emission-side lens portion 42 can be freely designed by using the hollow portion 43, it is possible to increase a degree of freedom in designing the shape of the incidence-side lens portion 41 and a position relationship between the light source 5, the incidence-side lens portion 41, and the emission-side lens portion 42. Further, the manufacturing cost is lower than that in the case where a reflective surface is formed by depositing a metal or the like instead of the hollow portion 43.

The second surface 432 is preferably a total reflective surface. According to this configuration, among the light incident on the incidence-side lens portion 41, almost all of the light that is not incident on the emission-side lens portion 42 as it is can be reflected by the second surface 432 and incident on the emission-side lens portion 42, and thus the light use efficiency can be further increased. Further, it is possible to prevent the light reaching the second surface 432 from passing through the second surface 432 and being incident on the adjacent optical system 20, and thus the occurrence of stray light can be reduced.

The incidence-side lens portion 41 preferably has a shape configured to refract the light incident from the incidence surface of the incidence-side lens portion 41 toward the boundary portion 433 between the first surface 431 and the second surface 432. According to this configuration, since the light incident from the incidence surface of the incidence-side lens portion 41 is directed to the second surface 432 which is a reflective surface, the light use efficiency can be further increased. Further, it is more preferable that the incidence-side lens portion 41 has a shape in which the light incident from the incidence surface of the incidence-side lens portion 41 is collected in the vicinity of the boundary portion 433 configuring the cut line forming portion. According to this configuration, it is possible to improve clarity of the cut line while enhancing the light use efficiency. In the present embodiment, an incidencesurface lens of the incidence-side lens portion 41 has a paraboloid shape (aspheric surface and free-form surface) having a focus in the vicinity of the cut line forming portion.

As shown in FIG. 4, a step portion 434 is preferably formed, as the cut line forming portion, in the boundary portion 433 between the first surface 431 and the second surface 432. Further, the step portion 434 is located in the vicinity of a rear-side focus of the emission-side lens portion 42. According to this configuration, a low-beam light distribution pattern can be formed with a simple configuration without using a shade. Further, since the low-beam distribution pattern can be formed without using the shade, the light use efficiency is less likely to decrease. The step portion 434 is provided in each optical system 20. The shape of the step portion 434 can be appropriately changed according to a desired distribution pattern.

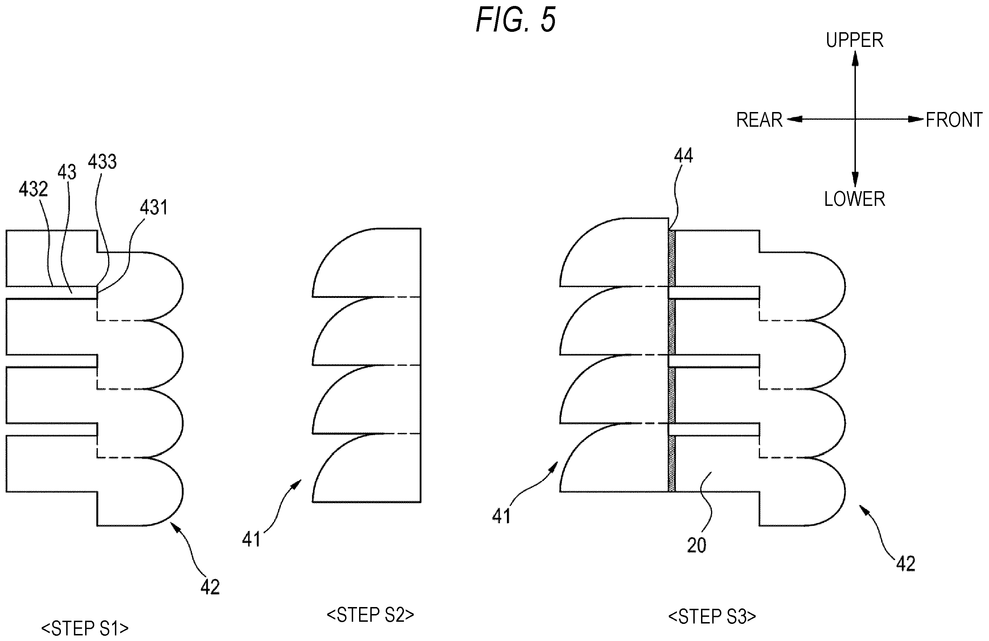

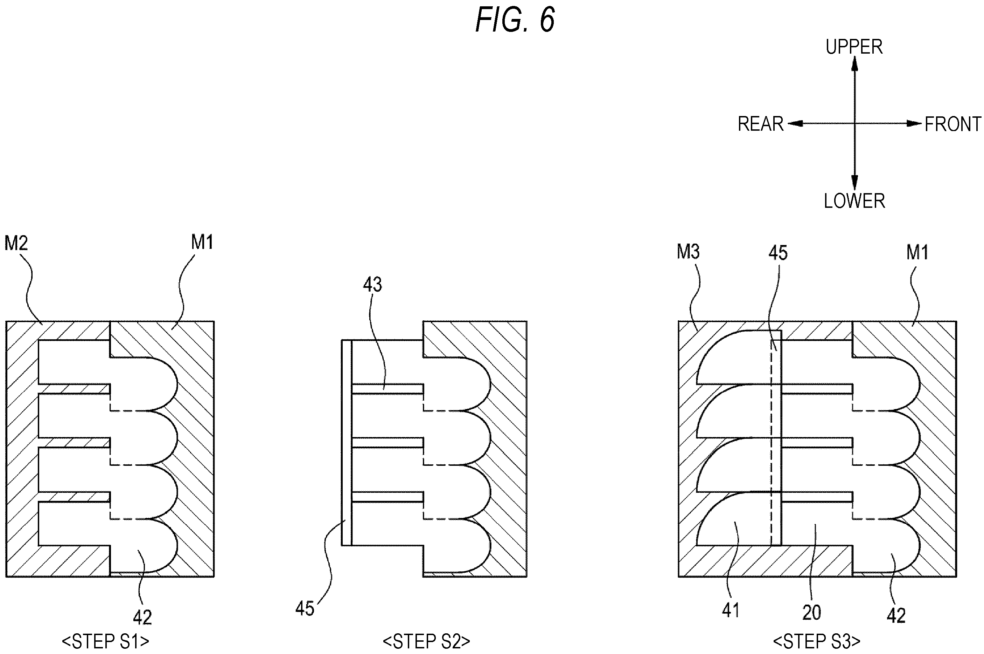

Hereinafter, a method for manufacturing the microlens array 4 described above will be described with reference to FIGs. 5 and 6. FIG. 5 shows diagrams of an example of the method for manufacturing the microlens array 4 according to the first embodiment of the present disclosure. FIG. 6 shows diagrams of a modification of the method for manufacturing the microlens array 4 shown in FIG. 5.

The manufacturing method shown in FIG. 5 includes steps S1 to S3. In step S1, for example, a transparent resin or a glass material is molded by a mold, to manufacture a component that excludes the incidence-side lens portion 41 from the microlens array 4 (for example, a component in which the emission-side lens portion 42 and a lens portion including the first surface 431 and the second surface 432 forming the boundary portion 433 are integrated). In the component manufactured by step S1, the plurality of emission-side lens portions 42 are stacked in the upper-lower direction and the left-right direction, and the hollow portion 43 is provided as a hollow penetrating in the left-right direction. Although not shown in FIG. 5, the boundary portion 433 between the first surface 431 and the second surface 432 is provided with the step portion 434 for each emission-side lens portion 42.

In step S2, for example, a transparent resin or a glass material is molded by a mold to manufacture a component including the plurality of incidence-side lens portions 41. In the component manufactured by step S2, the plurality of incidence-side lens portions 41 are stacked in the upper-lower direction and the right-left direction. Either step S1 or step S2 may be performed first, or steps S1 and S2 may be performed simultaneously.

In step S3, the component manufactured in step S1 and the component manufactured in step S2 are attached to each other by an adhesive 44. The adhesive 44 is preferably a transparent adhesive having the same refractive index as the material of the lens. As the adhesive 44, for example, an acrylic transparent adhesive can be used. As the adhesive 44, it is preferable to use a material having the same refractive index as the material of the incidence-side lens portion 41 and the emission-side lens portion 42. The microlens array 4 according to the present embodiment is obtained by steps S1 to S3. In the microlens array 4 shown in FIG. 5, the hollow portion 43 when viewed from the right-left direction has a substantially rectangular shape, but may have a substantially triangular shape as shown in FIG. 3, or may have another shape.

The manufacturing method shown in FIG. 6 includes steps S11 to S13. In step S11, for example, the transparent resin or the glass material is molded using molds M1 and M2 to manufacture a component that excludes the incidence-side lens portion 41 from the microlens array 4. The component manufactured here is the same component as the component obtained in step S11.

Next, in step S12, only the mold M2 is removed, and a lid member 45 is inserted to cover an end portion on an opposite side of the emission-side lens portion 42. Accordingly, the rear direction of the hollow portion 43 is closed by the lid member 45. The lid member 45 is preferably a component made of the same material as the incidence-side lens portion 41 and the emission-side lens portion 42.

Next, in step S13, a mold M3 is attached to the mold M1 as illustrated. The mold M3 is a mold for further insert-molding the incidence-side lens portion 41 into the component obtained in step S12. By molding the incidence-side lens portion 41 using the mold M3, the microlens array 4 according to the present embodiment is obtained.

### (Second Embodiment)

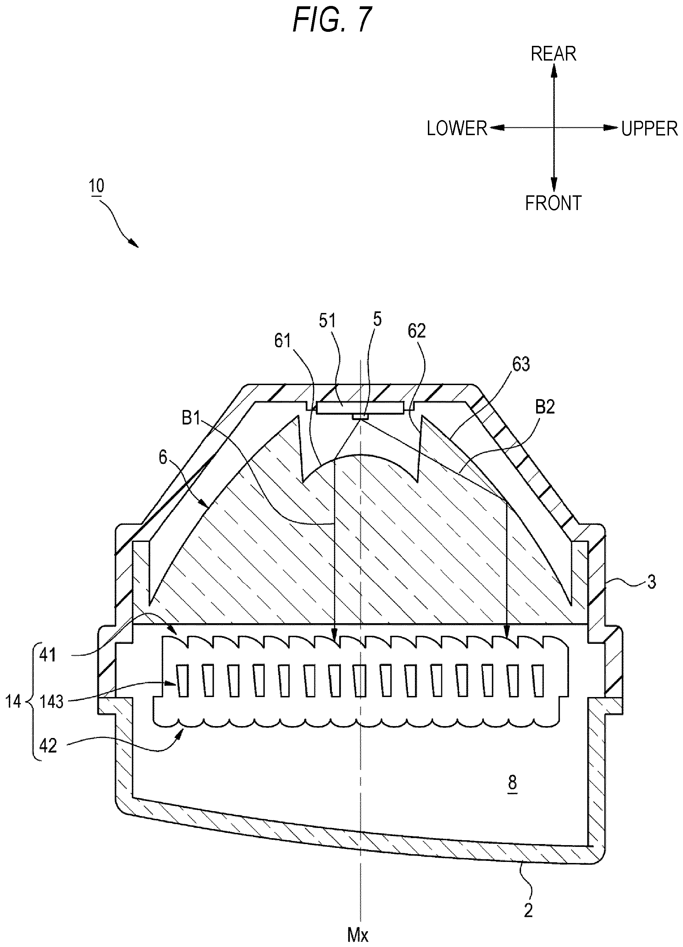

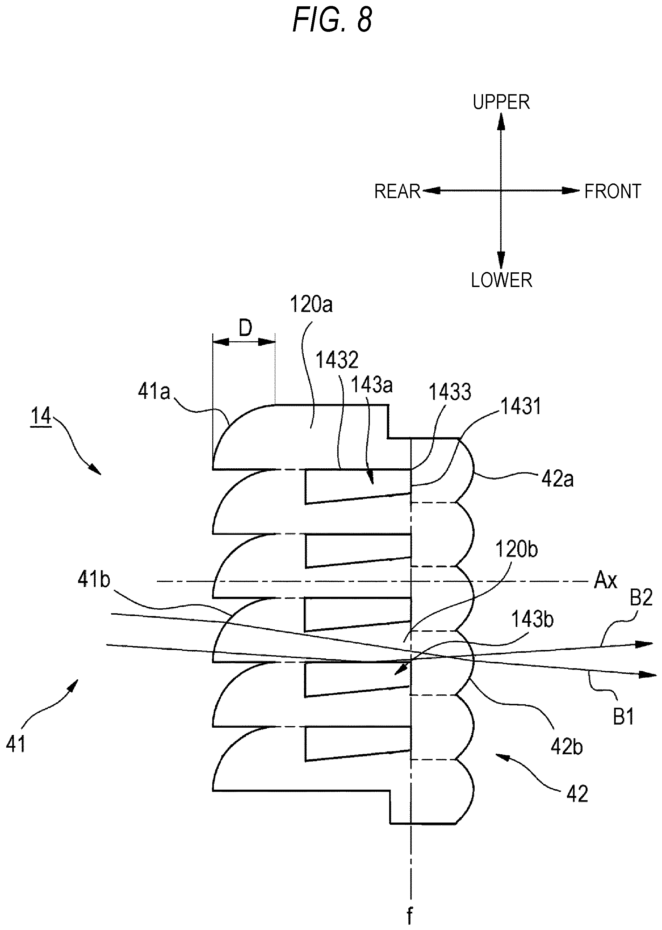

FIG. 7 is a schematic cross-sectional view of a vehicle lamp 10 according to a second embodiment of the present disclosure. FIG. 8 is a side view of a microlens array 14 shown in FIG. 7. The same components as those of the vehicle lamp 10 according to the first embodiment are denoted by the same reference numerals, and a repeated description thereof will be omitted.

The vehicle lamp 10 according to the second embodiment is different, in the configuration of the microlens array 14, from the vehicle lamp 1 according to the first embodiment. Specifically, as shown in FIG. 7, the microlens array 14 includes the incidence-side lens portion 41, the emission-side lens portion 42, and a low refractive index portion 143.

As illustrated in FIG. 8, for example, an optical system 120a includes a portion including the incidence surface 41a of the incidence-side lens portion 41, a portion including the emission surface 42a of the emission-side lens portion 42, and a low refractive index portion 143a. The same applies to an optical system 120b. The incidence-side lens portion 41 and the emission-side lens portion 42 are provided on a common optical axis Ax and face each other. A focal length of the emission-side lens portion 42 is equal to or smaller than a lens thickness D of the incidence-side lens portion 41.

The low refractive index portion 143 is provided between a pair of the incidence-side lens portion 41 and the emission-side lens portion 42 that forms one optical system 120. The incidence-side lens portion 41 is provided closer to a primary lens 6 side than is the low refractive index portion 143. The emission-side lens portion 42 is provided closer to an outer cover 2 side than is the low refractive index portion 143.

The low refractive index portion 143 is configured such that a refractive index of the low refractive index portion 143 is lower than a refractive index of other portions (the incidence-side lens portion 41, the emission-side lens portion 42, and a portion connecting the incidence-side lens portion 41 to the emission-side lens portion 42) configuring the optical system 120.

The low refractive index portion 143 and the other portions are formed of, for example, a transparent resin material or a glass material. The low refractive index portion 143 may be made of a material different from the material forming the other portions. For example, the low refractive index portion 143 is made of an acrylic resin or a silicone resin, and the other portions are made of a polycarbonate resin. The low refractive index portion 143 may be made of a silicone resin, and the other portions may be made of the acrylic resin or a cyclo-olefin polymer. Alternatively, the low refractive index portion 143 and the other portions may be made of a combination of materials other than those described above. According to this configuration, since the refractive index can be changed by a combination of the material of the low refractive index portion 143 and the material of the other portions, the low refractive index portion 143 having a different refractive index from that of the other portions can be easily formed.

The low refractive index portion 143 penetrates the microlens array 14 in the first direction (the left-right direction in the example of FIG. 7). According to this configuration, the low refractive index portions 143 can be collectively formed for the optical systems 120 arranged along the first direction, which contributes to reduction in manufacturing cost and reduction in time required for manufacturing.

In the present embodiment, the low refractive index portion 143 includes a first surface 1431 extending through the focus f of an emission surface of the emission-side lens portion 42, and a second surface 1432 extending from the first surface 1431 to an incidence surface of the incidence-side lens portion 41. A cut line forming portion is formed by a boundary portion 1433 between the first surface 1431 and the second surface 1432. In the present embodiment, the first surface 1431 is on a plane including the upper-lower direction and the left-right direction. The second surface 1432 is on a plane including the front-rear direction and the left-right direction.

As described above, since the configuration according to the present embodiment includes the low refractive index portion 143 having the second surface 432, a similar effect as that of the first embodiment can be obtained. That is, among light incident on the incidence-side lens portion 41, at least a part of light that does not incident on the emission-side lens portion 42 can be reflected by the second surface 1432 of the low refractive index portion 143 and incident on the emission-side lens portion 42. Therefore, light use efficiency can be increased. Further, since a path of the light from the light source 5 to the emission-side lens portion 42 can be freely designed by using the low refractive index portion 143, it is possible to increase a degree of freedom in designing the shape of the incidence-side lens portion 41 and a position relationship between the light source 5, the incidence-side lens portion 41, and the emission-side lens portion 42.

The low refractive index portion 143 and other portions are preferably formed in a way that a difference in refractive index is 0.03 or more, more preferably 0.05 or more. According to this configuration, among the light incident on the incidence-side lens portion 41, almost all of the light that is not incident on the emission-side lens portion 42 as it is can be reflected by the second surface 1432 and incident on the emission-side lens portion 42, and thus the light use efficiency can be further increased. Further, it is possible to prevent the light reaching the second surface 1432 from passing through the second surface 1432 and being incident on the adjacent optical system 120, and thus the occurrence of stray light can be reduced.

The incidence-side lens portion 41 preferably has a shape that refracts the light incident from the incidence surface of the incidence-side lens portion 41 toward the boundary portion 1433 between the first surface 1431 and the second surface 1432. According to this configuration, since the light incident from the incidence surface of the incidence-side lens portion 41 is directed to the second surface 1432 which is a reflective surface, the light use efficiency can be further increased. Further, it is more preferable that the incidence-side lens portion 41 has a shape in which the light incident from the incidence surface of the incidence-side lens portion 41 is collected in the vicinity of the boundary portion 1433 configuring the cut line forming portion. According to this configuration, it is possible to improve clarity of the cut line while enhancing the light use efficiency.

As shown in FIG. 4, a step portion 1434 is preferably formed, as the cut line forming portion, in the boundary portion 1433 between the first surface 1431 and the second surface 1432. Further, the step portion 1434 is located in the vicinity of a rear-side focus of the emission-side lens portion 42. According to this configuration, a low-beam light distribution pattern can be formed with a simple configuration without using a shade. Further, since the low-beam distribution pattern can be formed without using the shade, the light use efficiency is less likely to decrease.

The low refractive index portion 143 may be made of an opaque material. For example, the opaque material is colored by adding a pigment to a transparent resin material or a glass material. According to this configuration, even in a case where the light reaching the second surface 1432 passes through the second surface 1432, the light is shielded by the low refractive index portion 143. Accordingly, it is possible to prevent the light reaching the second surface 1432 from passing through the second surface 1432 and being incident on the adjacent optical system 120, and thus the occurrence of the stray light can be reduced.

In the present embodiment, the low refractive index portion 143 when viewed from the left-right direction has a substantially rectangular shape, but may have a substantially triangular shape as in the first embodiment shown in FIG. 3, or may have another shape.

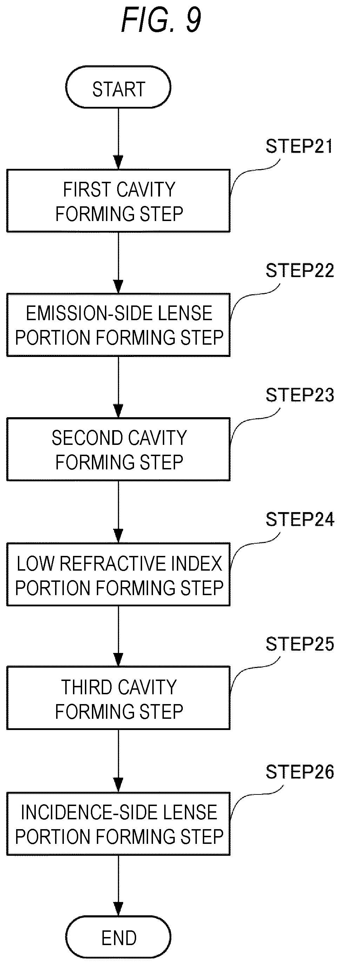

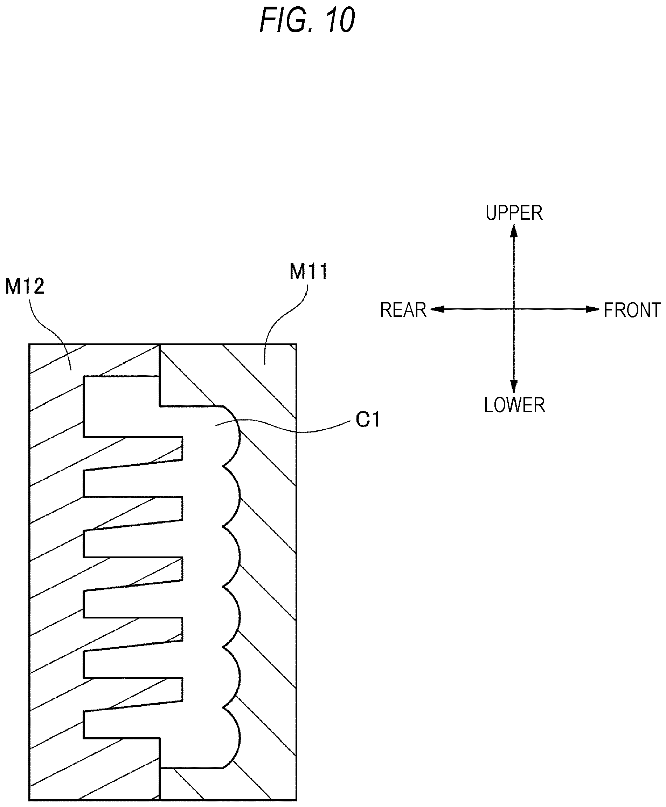

Hereinafter, a method for manufacturing the microlens array 14 as described above will be described with reference to FIGs. 9 to 17. FIG. 9 is a flowchart showing an example of the method for manufacturing the microlens array 14 according to the second embodiment of the present disclosure. FIGs. 10 to 17 are diagram illustrating steps of the method for manufacturing the microlens array 14. In the present embodiment, an example in which the microlens array 14 is formed using a multicolor molding method will be described.

First, a transparent resin material or a glass material is molded by molds to form the emission-side lens portion 42 of the microlens array 14. Specifically, as shown in FIG. 10, a first mold M11 and a second mold M12 are brought into contact with each other to form a first cavity C1 (STEP 21 of FIG. 9: first cavity forming step).

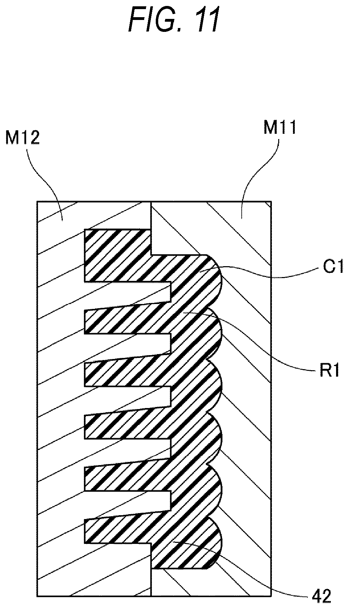

Subsequently, as shown in FIG. 11, a melted first resin R1 is injected into the first cavity C1, and the first resin R1 is cured in the first cavity C1. Accordingly, the emission-side lens portion 42 is formed (STEP 22 of FIG. 9: emission-side lens portion forming step). In this example, a component that excludes the incidence-side lens portion 41 and the low refractive index portion 143 from the microlens array 4 (that is, a component in which the emission-side lens portion 42 and a portion connecting the emission-side lens portion 42 to the incidence-side lens portion 41 are integrated) is formed. The plurality of emission-side lens portions 42 are stacked in the upper-lower direction and the left-right direction, and a portion corresponding to the low refractive index portion 143 is a cavity penetrating in the left-right direction.

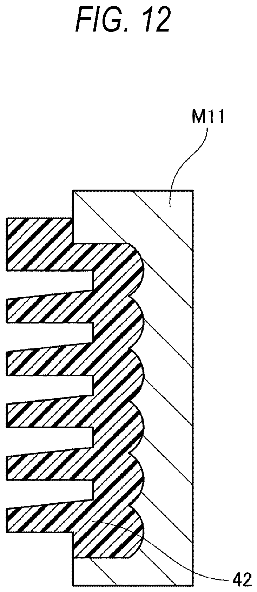

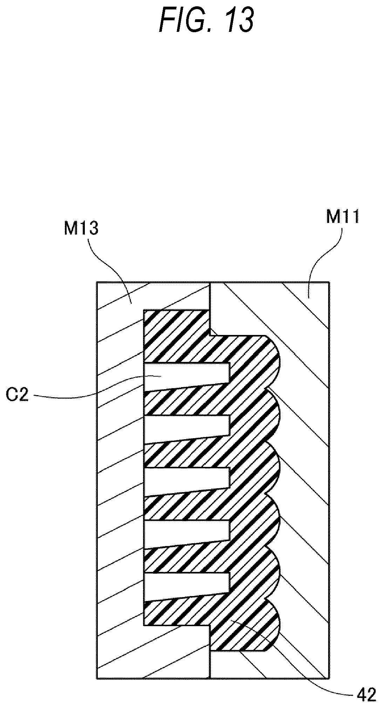

Next, the low refractive index portion 143 is insert-molded into the emission-side lens portion 42 obtained in the above step. Specifically, as shown in FIG. 12, the second mold M12 is separated from the first mold M11 while holding the emission-side lens portion 42. Then, as shown in FIG. 13, the first mold M11 and a third mold M13 are brought into contact with each other to form a second cavity C2 (STEP 23 of FIG. 9: second cavity forming step).

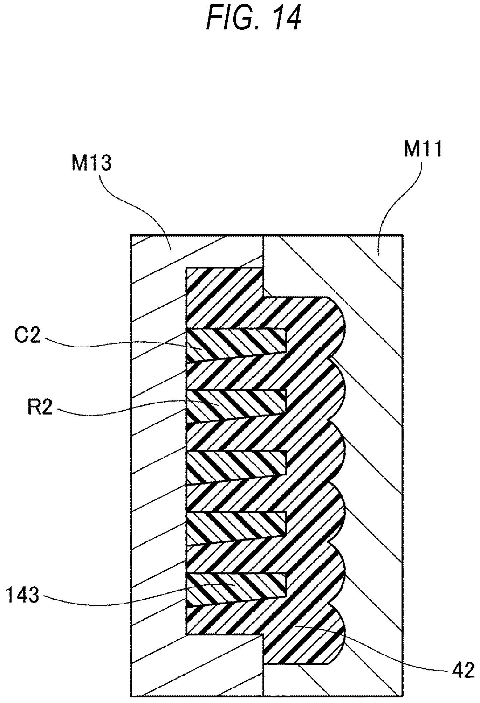

Subsequently, as shown in FIG. 14, a melted second resin R2 is injected into the second cavity C2, and the second resin R2 is cured in the second cavity C2 to form the low refractive index portion 143 (STEP 24 of FIG. 9: low refractive index portion forming step). Thus, a component for insert-molding the low refractive index portion 143 into the emission-side lens portion 42 is formed. As the second resin R2, a resin of which the refractive index when cured is lower than that of the first resin R1 is used.

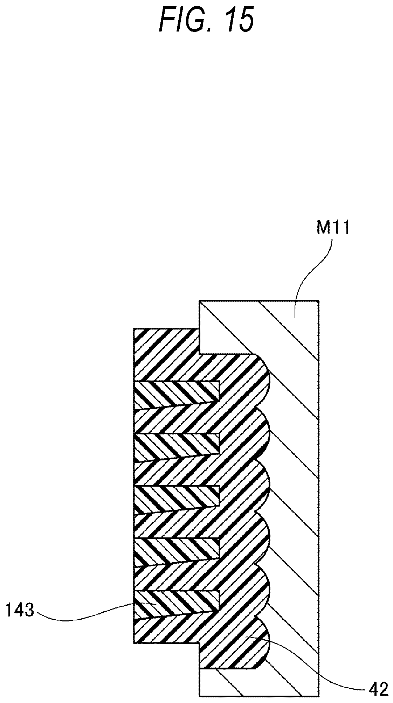

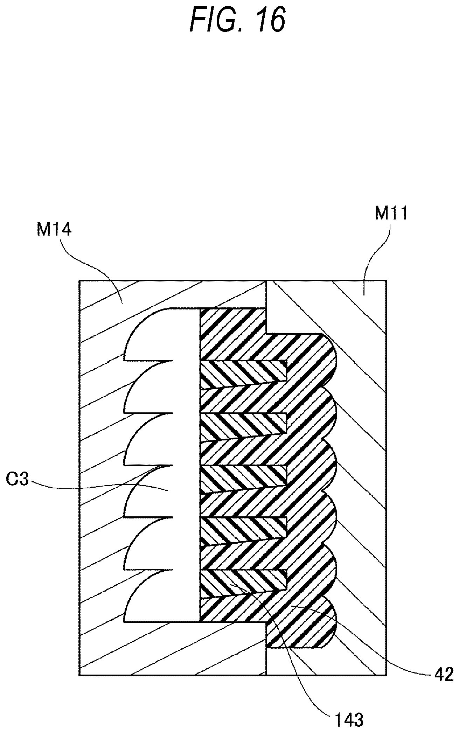

Next, the incidence-side lens portion 41 is insert-molded into the component obtained in the above step. Specifically, as shown in FIG. 15, the third mold M13 is separated from the first mold M11 while holding a component including the emission-side lens portion 42 and the low refractive index portion 143. Then, as shown in FIG. 16, the first mold M11 and the fourth mold M14 are brought into contact with each other to form a third cavity C3 (STEP 25 of FIG. 9: third cavity forming step).

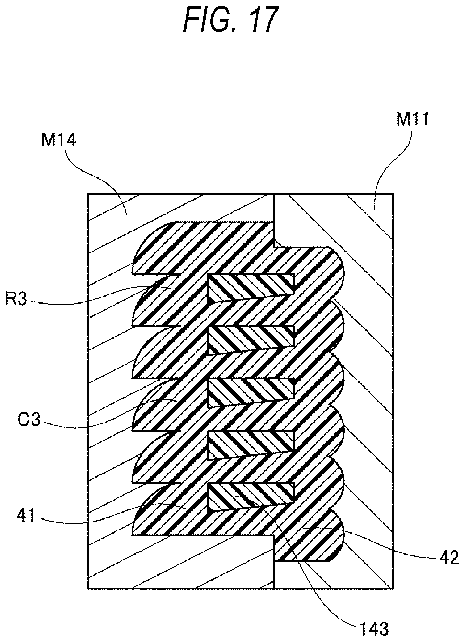

Subsequently, as shown in FIG. 17, the molten third resin R3 is injected into the third cavity C3, and the third resin R3 is cured in the third cavity C3 to form the incidence-side lens portion 41 (STEP 26 of FIG. 9: incidence-side lens portion forming step). Accordingly, the microlens array 14 according to the present embodiment is obtained. As the third resin R3, a resin of which the refractive index when cured is higher than that of the second resin R2 is used. For example, the same resin as the first resin R1 is used for the third resin R3.

In the case where the incidence-side lens portion 41, the low refractive index portion 143, and the emission-side lens portion 43 are formed separately and then adhered to an adhesive, assembly accuracy between the components is required. According to the above method, the microlens array 14 is formed by a multicolor molding (three-color molding) method. That is, the next component is insert-molded without removing the component molded in each step from the mold. As a result, it is possible to manufacture the microlens array 14 with high accuracy without the need for assembling each component or bonding the components.

In the present embodiment, the incidence-side lens portion 41 is insert-molded after the emission-side lens portion 42 is formed first. However, the emission-side lens portion 42 may be insert-molded after the incidence-side lens portion 41 is formed.

The present invention is not limited to the above-described embodiments, and may be appropriately modified, improved, or the like. In addition, the material, shape, dimension, numerical value, form, number, arrangement place, and the like of each component in the above-described embodiment are optionally selected and are not limited as long as the present invention can be achieved.

For example, although the microlens arrays 4 and 14 of the present disclosure are preferably used for a vehicle lamp, they may be used for a lamp for other uses.

The present application is based on Japanese Patent Application No. 2021-061229 filed on March 31, 2021 and Japanese Patent Application No. 2021-139972 filed on August 30, 2021.

## Claims

1. A microlens array (4) comprising:
a plurality of optical systems,
wherein each of the optical systems includes a pair of an incidence-side lens portion (41) and an emission-side lens portion (42),
the microlens array (4) being **characterized in that**:
a hollow portion (43a) is provided between an incidence surface (41a) of the incidence-side lens portion (41) and an emission surface (42a) of the emission-side lens portion (42),
the hollow portion (43a) includes:
a first surface (431) extending to a focus position of the emission-side lens portion (42); and
a second surface (432) extending from the first surface (431) toward the incidence surface (41a), and
a cut line forming portion is formed by a boundary portion (433) between the first surface (431) and the second surface (432).

2. A resin-molded microlens array (4) comprising:
a plurality of optical systems,
wherein each of the optical systems includes a pair of an incidence-side lens portion (41) and an emission-side lens portion (42),
the resin-molded microlens array (4) being **characterized in that**:
a low refractive index portion (143) is provided between an incidence surface (41a) of the incidence-side lens portion (41) and an emission surface (42a) of the emission-side lens portion (42),
a refractive index of the low refractive index portion (143) is lower than a refractive index of another portion,
the low refractive index portion (143) includes:
a first surface (1431) extending through a focus of the emission surface (42a); and
a second surface (1432) extending from the first surface (1431) to the incidence surface (41a), and
a cut line forming portion is formed by a boundary portion (1433) between the first surface (1431) and the second surface (1432).

3. The microlens array (4) according to claim 2,
wherein the low refractive index portion (143) and the other portion are made of different materials.

4. The microlens array (4) according to claim 2 or 3,
wherein a difference between the refractive index of the low refractive index portion (143) and the refractive index of the other portion is 0.03 or more.

5. The microlens array (4) according to claim 4,
wherein a difference between the refractive index of the low refractive index portion (143) and the refractive index of the other portion is 0.05 or more.

6. The microlens array (4) according to any one of claims 2 to 5,
wherein the low refractive index portion (143) is made of an opaque material.

7. The microlens array (4) according to any one of claims 2 to 6,
wherein at least a part of the plurality of optical systems is integrally formed along a first direction, and
the low refractive index portion (143) penetrates the microlens array (4) in the first direction.

8. The microlens array (4) according to claim 1,
wherein the second surface (432) is a total reflective surface.

9. The microlens array (4) according to claim 1 or 8,
wherein at least a part of the plurality of optical systems is integrally formed along a first direction, and
the hollow portion (43a) penetrates the microlens array (4) in the first direction.

10. The microlens array (4) according to any one of claims 1 to 9,
wherein a step portion (434) is provided in the boundary portion (433), and
the step portion (434) is located in the vicinity of a rear focus of the emission-side lens portion (42), and the step portion (434) configures the cut line forming portion.

11. The microlens array (4) according to any one of claims 1 to 10,
wherein the incidence-side lens portion (42) is configured to refract, toward the boundary portion (433), light incident from the incidence surface (41a).

12. A vehicle lamp (1) comprising:
a light source (5); and
the microlens array (4) according to any one of claims 1 to 11.

## Patentansprüche

1. Mikrolinsenanordnung (4), umfassend:
eine Vielzahl von optischen Systemen,
wobei jedes der optischen Systeme ein Paar aus einem einfallsseitigen Linsenabschnitt (41) und einem ausgangsseitigen Linsenabschnitt (42) umfasst,
wobei die Mikrolinsenanordnung (4) **dadurch gekennzeichnet ist, dass**:
ein Hohlraumabschnitt (43a) zwischen einer Einfallsfläche (41a) des einfallsseitigen Linsenabschnitts (41) und einer Austrittsfläche (42a) des ausgangsseitigen Linsenabschnitts (42) bereitgestellt ist,
wobei der Hohlraumabschnitt (43a) Folgendes umfasst:
eine erste Fläche (431), die sich bis zu einer Fokusposition des ausgangsseitigen Linsenabschnitts (42) erstreckt; und
eine zweite Fläche (432), die sich von der ersten Fläche (431) in Richtung der Einfallsfläche (41a) erstreckt, und
wobei ein Schnittlinienbildungsabschnitt durch einen Grenzabschnitt (433) zwischen der ersten Fläche (431) und der zweiten Fläche (432) gebildet ist.

2. Harzgeformte Mikrolinsenanordnung (4), umfassend:
eine Vielzahl von optischen Systemen,
wobei jedes der optischen Systeme ein Paar aus einem einfallsseitigen Linsenabschnitt (41) und einem ausgangsseitigen Linsenabschnitt (42) umfasst,
wobei die harzgeformte Mikrolinsenanordnung (4) **dadurch gekennzeichnet ist, dass**:
ein Abschnitt mit niedrigem Brechungsindex (143) zwischen einer Einfallsfläche (41a) des einfallsseitigen Linsenabschnitts (41) und einer Austrittsfläche (42a) des ausgangsseitigen Linsenabschnitts (42) bereitgestellt ist,
wobei ein Brechungsindex des Abschnitts mit niedrigem Brechungsindex (143) niedriger ist als ein Brechungsindex eines anderen Abschnitts,
wobei der Abschnitt mit niedrigem Brechungsindex (143) Folgendes umfasst:
eine erste Fläche (1431), die sich durch einen Fokus der Austrittsfläche (42a) erstreckt; und
eine zweite Fläche (1432), die sich von der ersten Fläche (1431) zu der Einfallsfläche (41a) erstreckt, und
wobei ein Schnittlinienbildungsabschnitt durch einen Grenzabschnitt (1433) zwischen der ersten Fläche (1431) und der zweiten Fläche (1432) gebildet ist.

3. Mikrolinsenanordnung (4) nach Anspruch 2,
wobei der Abschnitt mit niedrigem Brechungsindex (143) und der andere Abschnitt aus unterschiedlichen Materialien gefertigt sind.

4. Mikrolinsenanordnung (4) nach Anspruch 2 oder 3,
wobei eine Differenz zwischen dem Brechungsindex des Abschnitts mit niedrigem Brechungsindex (143) und dem Brechungsindex des anderen Abschnitts 0,03 oder mehr beträgt.

5. Mikrolinsenanordnung (4) nach Anspruch 4,
wobei eine Differenz zwischen dem Brechungsindex des Abschnitts mit niedrigem Brechungsindex (143) und dem Brechungsindex des anderen Abschnitts 0,05 oder mehr ist.

6. Mikrolinsenanordnung (4) nach einem der Ansprüche 2 bis 5,
wobei der Abschnitt mit niedrigem Brechungsindex (143) aus einem opaken Material gefertigt ist.

7. Mikrolinsenanordnung (4) nach einem der Ansprüche 2 bis 6,
wobei zumindest ein Teil der Vielzahl von optischen Systemen entlang einer ersten Richtung integral gebildet ist, und
wobei der Abschnitt mit niedrigem Brechungsindex (143) die Mikrolinsenanordnung (4) in der ersten Richtung durchdringt.

8. Mikrolinsenanordnung (4) nach Anspruch 1,
wobei die zweite Fläche (432) eine totalreflektierende Fläche ist.

9. Mikrolinsenanordnung (4) nach Anspruch 1 oder 8,
wobei zumindest ein Teil der Vielzahl von optischen Systemen entlang einer ersten Richtung integral gebildet ist, und
wobei der Hohlraumabschnitt (43a) die Mikrolinsenanordnung (4) in der ersten Richtung durchdringt.

10. Mikrolinsenanordnung (4) nach einem der Ansprüche 1 bis 9,
wobei ein Stufenabschnitt (434) in dem Grenzabschnitt (433) bereitgestellt ist, und
sich der Stufenabschnitt (434) in der Nähe eines hinteren Fokus des ausgangsseitigen Linsenabschnitts (42) befindet und der Stufenabschnitt (434) den Schnittlinienbildungsabschnitt bildet.

11. Mikrolinsenanordnung (4) nach einem der Ansprüche 1 bis 10,
wobei der einfallsseitige Linsenabschnitt (42) konfiguriert ist, um Licht, das von der Einfallsfläche (41a) einfällt, in Richtung des Grenzabschnitts (433) zu brechen.

12. Fahrzeugleuchte (1), umfassend:
eine Lichtquelle (5); und
die Mikrolinsenanordnung (4) nach einem der Ansprüche 1 bis 11.

## Revendications

1. Réseau de microlentilles (4), comprenant :
une pluralité de systèmes optiques,
dans lequel chacun des systèmes optiques comprend une paire constituée d'une partie lentille côté incidence (41) et d'une partie lentille côté émission (42),
le réseau de microlentilles (4) étant **caractérisé en ce que** :
une partie creuse (43a) est disposée entre une surface d'incidence (41a) de la partie lentille côté incidence (41) et une surface d'émission (42a) de la partie lentille côté émission (42),
la partie creuse (43a) comprend :
une première surface (431) s'étendant jusqu'à une position de focalisation de la partie lentille côté émission (42) ; et
une deuxième surface (432) s'étendant depuis la première surface (431) vers la surface d'incidence (41a), et
une partie formant ligne de coupe est formée par une partie de délimitation (433) entre la première surface (431) et la deuxième surface (432).

2. Réseau de microlentilles moulé en résine (4), comprenant :
une pluralité de systèmes optiques,
dans lequel chacun des systèmes optiques comprend une paire constituée d'une partie lentille côté incidence (41) et d'une partie lentille côté émission (42),
le réseau de microlentilles moulé en résine (4) étant **caractérisé en ce que** :
une partie à faible indice de réfraction (143) est disposée entre une surface d'incidence (41a) de la partie lentille côté incidence (41) et une surface d'émission (42a) de la partie lentille côté émission (42),
un indice de réfraction de la partie à faible indice de réfraction (143) est inférieur à un indice de réfraction d'une autre partie,
la partie à faible indice de réfraction (143) comprend :
une première surface (1431) s'étendant à travers un foyer de la surface d'émission (42a) ; et
une deuxième surface (1432) s'étendant depuis la première surface (1431) jusqu'à la surface d'incidence (41a), et
une partie formant ligne de coupe est formée par une partie de délimitation (1433) entre la première surface (1431) et la deuxième surface (1432).

3. Réseau de microlentilles (4) selon la revendication 2,
dans lequel la partie à faible indice de réfraction (143) et l'autre partie sont constituées de matériaux différents.

4. Réseau de microlentilles (4) selon la revendication 2 ou 3,
dans lequel une différence entre l'indice de réfraction de la partie à faible indice de réfraction (143) et l'indice de réfraction de l'autre partie est supérieure ou égale à 0,03.

5. Réseau de microlentilles (4) selon la revendication 4,
dans lequel une différence entre l'indice de réfraction de la partie à faible indice de réfraction (143) et l'indice de réfraction de l'autre partie est supérieure ou égale à 0,05.

6. Réseau de microlentilles (4) selon l'une quelconque des revendications 2 à 5,
dans lequel la partie à faible indice de réfraction (143) est constituée d'un matériau opaque.

7. Réseau de microlentilles (4) selon l'une quelconque des revendications 2 à 6,
dans lequel au moins une partie de la pluralité de systèmes optiques est formée d'une seule pièce selon une première direction, et
la partie à faible indice de réfraction (143) traverse le réseau de microlentilles (4) dans la première direction.

8. Réseau de microlentilles (4) selon la revendication 1,
dans lequel la deuxième surface (432) est une surface de réflexion totale.

9. Réseau de microlentilles (4) selon la revendication 1 ou 8,
dans lequel au moins une partie de la pluralité de systèmes optiques est formée d'une seule pièce selon une première direction, et
la partie creuse (43a) traverse le réseau de microlentilles (4) dans la première direction.

10. Réseau de microlentilles (4) selon l'une quelconque des revendications 1 à 9,
dans lequel une partie en escalier (434) est disposée dans la partie de délimitation (433), et
la partie en escalier (434) est située à proximité d'un foyer arrière de la partie lentille côté émission (42), et la partie en escalier (434) configure la partie formant ligne de coupe.

11. Réseau de microlentilles (4) selon l'une quelconque des revendications 1 à 10,
dans lequel la partie lentille côté incidence (42) est configurée pour réfracter, vers la partie de délimitation (433), la lumière incidente provenant de la surface d'incidence (41a).

12. Lampe de véhicule (1), comprenant :
une source lumineuse (5) ; et
le réseau de microlentilles (4) selon l'une quelconque des revendications 1 à 11.
